# EUROPEAN PATENT APPLICATION

(11) **EP 1 860 611 A2**
(43) Date of publication of application: **28.11.2007**
(21) Application number: 07108501.3
(22) Date of filing: 18.05.2007
(51) Int. Cl.: G06T 5/00

(54) **Image processing system for pixel value correction**

(30) Priority: 22.05.2006 JP 2006141708
(71) Applicant: FUJITSU LIMITED, Kawasaki-shi, Kanagawa 211-8588 (JP)
(72) Inventor: Seki, Takeshi, KASUGAI-SHI, AICHI 487-0013 (JP); Fukuoka, Tomohiro, KASUGAI-SHI, AICHI 487-0013 (JP); Iga, Kiichiro, KASUGAI-SHI, AICHI 487-0013 (JP); Watarai, Yuji, KASUGAI-SHI, AICHI 487-0013 (JP)
(74) Representative: Kreutzer, Ulrich

(57) **Abstract**

An image processing system (1) comprises: a buffer (2) for storing a target pixel that is an object of image processing and a group of pixels surrounding the target pixel, such that the pixels are aligned in horizontal and vertical directions; a maximum value detector (31) for obtaining a maximum value from pixels of the surrounding pixel group which pixels have the same color as the target pixel; a minimum value detector (32) for obtaining a minimum value from the pixels of the surrounding pixel group which pixels have the same color as the target pixel; and a subtracter (33) for subtracting a result obtained by the minimum value detector (32) from a result obtained by the maximum value detector (31).

## Description

### CROSS-REFERENCE TO RELATED APPLICATIONS

This application is based upon and claims the benefit of priority from the prior Japanese Patent Application No. 2006-141708 filed on May 22, 2006, the entire contents of which are incorporated herein by reference.

### BACKGROUND OF THE INVENTION

### 1. Field of the Invention

The field relates to an image processing system for correcting pixels that constitute an image, for example, by removing noise from image data.

One example of image processing systems for removing noise from image data is disclosed in Japanese Unexamined Patent Application Publication No. 2003-259126 shown in Fig. 7.

The image processing system 100 of Japanese Unexamined Patent Application Publication No. 2003-259126 has a median value calculating unit 112 for calculating the median value of a target pixel and its surrounding pixels (-2, -1, +1, +2) in an image block 131; and a subtracter 113 for subtracting the median value fmd from the value fi of the target pixel to obtain a difference value fd. The image processing system 100 further includes a multiplier 115 for multiplying the difference value fd by a gain G that has been set by a gain setting unit 114 to obtain a corrected value (G*fd); and a subtracter 116 for subtracting the correction value (G*fd) from the value fi of the target pixel to output a calculation value fout.

By setting the gain G based on the difference value fd, noise can be properly removed from the image data.

Incidentally, some of CCDs (charge coupled devices) used for digital cameras and the like output Bayer pattern image data. In cases where the technique of Japanese Unexamined Patent Application Publication No. 2003-259126 is applied to such systems having a CCD, Bayer pattern image data is converted into RGB image data or YUV image data and image processing such as noise removal is performed on the RGB image data or YUV image data obtained by the conversion.

However, since noise components are dispersed during the conversion of Bayer pattern image data into RGB image data or YUV image data, pixels containing no noise are affected by the dispersed noise components so that the accuracy of the image processing such as noise removal deteriorates. In addition, an image conversion circuit used for the conversion of Bayer pattern image data into RGB image data or YUV image data is required, which leads to an increase in the circuit scale of the image device.

Therefore it is necessary to provide an image processing system that is capable of performing high-accuracy image processing such as noise removal on a group of basic pixels (e.g., Bayer pattern image data) covering all the three primary colors and is small in circuit scale because it does not need an image conversion circuit.

### SUMMARY OF THE INVENTION

In order to achieve the above object, there is provided an image processing system comprising: a buffer for storing a target pixel that is an object of image processing and a group of pixels surrounding the target pixel, such that the pixels are aligned in horizontal and vertical directions; a maximum value detector for obtaining a maximum value from pixels of the surrounding pixel group which pixels have the same color as the target pixel; a minimum value detector for obtaining a minimum value from the pixels of the surrounding pixel group which pixels have the same color as the target pixel; and a subtracter for subtracting a result obtained by the minimum value detector from a result obtained by the maximum value detector.

The minimum value of the pixels of the surrounding pixel group stored in the buffer which pixels have the same color as the target pixel is subtracted from the maximum value of the pixels of the surrounding pixel group stored in the buffer which pixels have the same color as the target pixel. This subtraction makes it possible to obtain a value used for detecting the condition of changes in the pixels of the image data i.e., whether the pixels change evenly or the pixels change rapidly like the case of edges.

With the above arrangement, even if the image data is data such as Bayer pattern image data in which basic pixels covering all the three primary colors are arranged, the value used for detecting the condition of the image data can be obtained without converting the image data. Compared to the arrangement in which the condition of the image data is detected after converting the image data into RGB image data and/or YUV image data, the image data of the invention is not affected by the noise of the surrounding images included in the image after conversion. As a result, a highly accurate detection value can be obtained. In addition, the system of the invention does not need an image conversion circuit and therefore can be constructed in a small scale.

In order to achieve the object, there is also provided an image processing system comprising: a buffer for storing a target pixel that is an object of image processing and a group of pixels surrounding the target pixel, such that the pixels are aligned in horizontal and vertical directions; and a dispersion value calculating unit for obtaining a dispersion value of pixels of the surrounding pixel group which pixels have the same color as the target pixel.

The value used for detecting whether the condition of changes in the pixels of the image data is even or rapid (in the case of edge regions) can be acquired by obtaining the dispersion value of the pixels of the surrounding pixel group stored in the buffer which pixels have the same color as the target pixel.

With the above arrangement, even if the image data is data such as Bayer pattern image data in which basic pixels covering all the three primary colors are arranged, the value used for detecting the condition of the image data can be obtained without converting the image data. Compared to the arrangement in which the condition of the image data is detected after converting the image data into RGB image data and/or YUV image data, the image data of the invention is not affected by the noise of the surrounding images included in the image after conversion. As a result, a highly accurate detection value can be obtained. In addition, the system of the invention does not need an image conversion circuit and therefore can be constructed in a small scale.

Further, there is provided an image processing system comprising: a buffer for storing a target pixel that is an object of image processing and a group of pixels surrounding the target pixel, such that the pixels are aligned in horizontal and vertical directions; a luminosity average value calculating unit for obtaining a luminosity average value that is an average value of the surrounding pixel group; a surrounding luminosity average value calculating unit for choosing pixels that cover all the three primary colors from the surrounding pixel group to prepare pixel combinations and obtaining an ambient luminosity average value of each pixel combination, the ambient luminosity average value being an average value of a pixel combination; and a luminosity difference cumulative value calculating unit for obtaining a luminosity difference cumulative value that is the sum of absolute values each obtained by subtracting the luminosity average value from each ambient luminosity average value.

The value used for detecting whether the condition of changes in the pixels of the image data is even or rapid (in the case of edge regions) can be acquired by obtaining the sum of absolute values each obtained by subtracting the luminosity average value from each ambient luminosity average value.

With the above arrangement, even if the image data is data such as Bayer pattern image data in which basic pixels covering all the three primary colors are arranged, the value used for detecting the condition of the image data can be obtained without converting the image data. Compared to the arrangement in which the condition of the image data is detected after converting the image data into RGB image data and/or YUV image data, the image data of the invention is not affected by the noise of the surrounding images included in the image after conversion. As a result, a highly accurate detection value can be obtained. In addition, the system of the invention does not need an image conversion circuit and therefore can be constructed in a small scale.

The above and further objects and novel features will more fully appear from the following detailed description when the same is read in connection with the accompanying drawings. It is to be expressly understood, however, that the drawings are for the purpose of illustration only and are not intended as a definition of the limits of the invention.

### BRIEF DESCRIPTION OF THE DRAWINGS

Fig. 1 is a circuit block diagram showing the configuration of an image processing system according to a first embodiment.
Fig. 2 is a functional block diagram showing the function of a first edge detector.
Fig. 3 is a functional block diagram showing the function of a second edge detector.
Fig. 4 is a circuit block diagram showing the configuration of an image processing system according to a second embodiment.
Fig. 5 is a functional block diagram showing the function of a third edge detector.
Fig. 6 is a circuit block diagram showing the configuration of an image processing system according to a third embodiment.

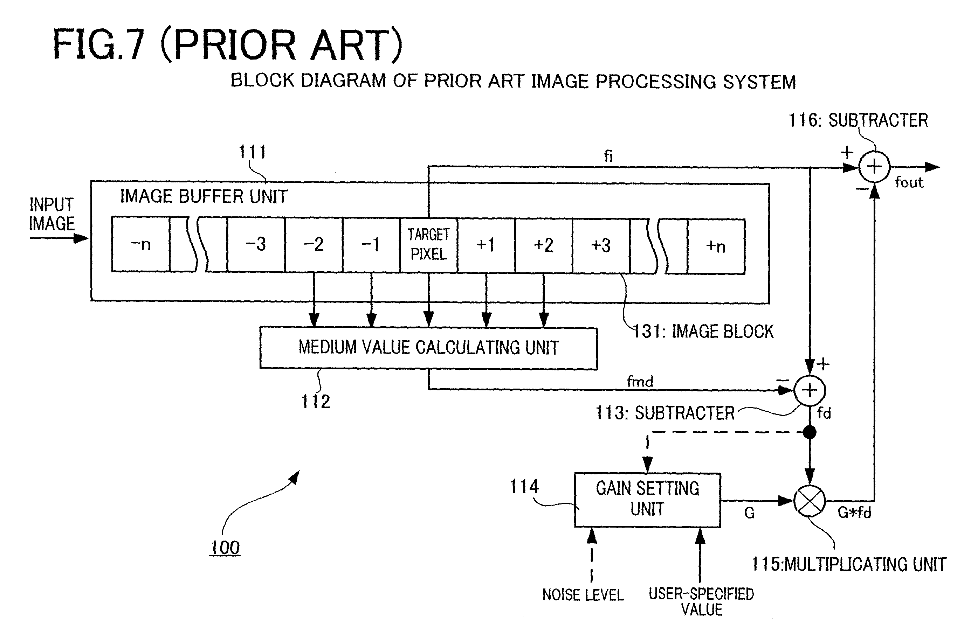

Fig. 7 is a block diagram of a prior art image processing system.

### DETAILED DESCRIPTION OF THE PREFERRED EMBODIMENTS

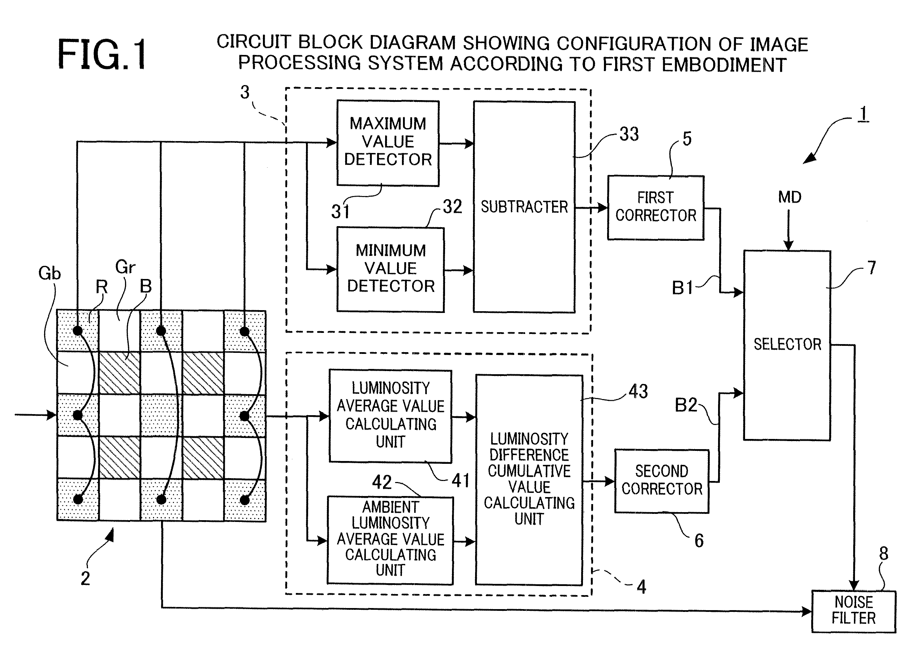

Referring now to Figs. 1 to 6, the image processing system of the invention will be hereinafter described in detail according to preferred embodiments.

### (First Embodiment)

Fig. 1 is a circuit block diagram showing the configuration of an image processing system 1 according to a first embodiment. The image processing system 1 inputs Bayer pattern image data in which R pixels, Gr pixels, Gb pixels and B pixels are arranged in a 2 by 2 pixel block. The system 1 determines by detection whether a 5 by 5 pixel block is an even region or an uneven edge region and properly performs filtering on a target pixel oo located at the center of the 5 by 5 pixel block according to the result of the detection.

In the following description, the leading pixel of each 5 by 5 pixel block is defined as a pixel nn, and pixels mn, on, pn, qn, nm, mm, om, pm, qm, no, mo, oo, po, qo, np, mp, op, pp, qp, nq, mq, oq, pq and qq are stored in this order in a horizontal direction.

The image processing system 1 includes: a buffer 2 for storing a 5 by 5 pixel block; a first edge detector 3; a first corrector 5 for correcting the result of the first edge detector 3; a second edge detector 4; a second corrector 6 for correcting the result of the second edge detector 4; a selector 7 for selecting either the output of the first corrector 5 or the output of the second corrector 6 or mixing both of them to output; and a noise filter 8 for filtering the target pixel oo among the pixels of the 5 by 5 pixel block and optimizing the filter characteristic according to the output of the selector 7.

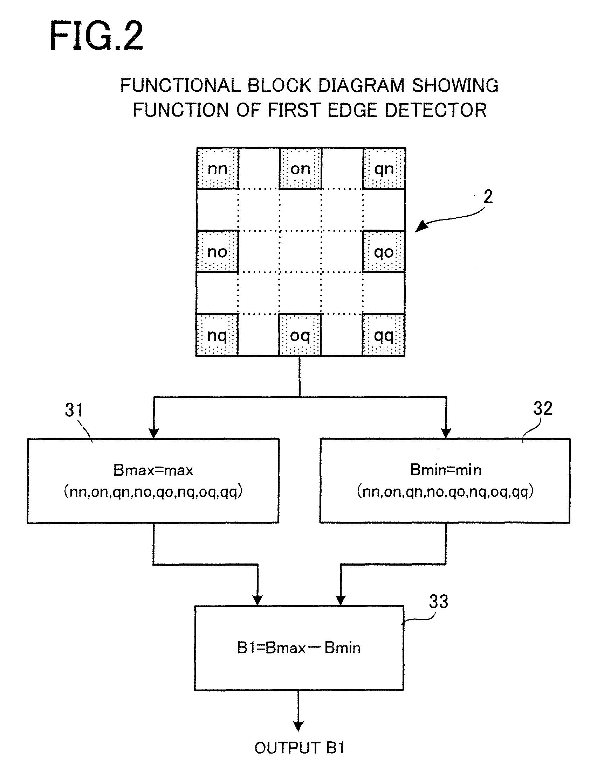

Fig. 2 is a functional block diagram showing the function of the first edge detector 3.

In a maximum value detector 31, the pixels nn, on, qn, no, qo, nq, oq, qq which have the same color as of the target pixel oo are selected from the surrounding pixel group and the maximum value Bmax of these pixels is detected. In a minimum value detector 32, the pixels nn, on, qn, no, qo, nq, oq, qq which have the same color as of the target pixel oo are selected from the surrounding pixel group and the minimum value Bmin of these pixels is detected. A subtracter 33 subtracts the minimum value Bmin from the maximum value Bmax and outputs the result of the subtraction as the max-min difference value B1.

In the above arrangement, if the surrounding pixel group constitutes an even image, the difference between the maximum value Bmax and minimum value Bmin of the surrounding pixel group is small and therefore a small value is output as the max-min difference value B1. On the other hand, if the surrounding pixel group constitutes a rapidly changing image such as an edge image, the difference between the maximum value Bmax and minimum value Bmin of the surrounding pixel group is large so that a large value is output as the max-min difference value B1.

In the buffer 2, the target pixel is placed at the center and the same number of surrounding pixels are aligned in horizontal and vertical directions. Thereby, intended pixels can be equally taken out from the pixels aligned in the horizontal direction and vertical direction. In the surrounding pixel group, the pixels having the same color as of the target pixel are arranged in the outermost periphery. Thereby, the pixels covering all the three primary colors can be effectively taken out. The image data of the surrounding pixel group is arranged in a Bayer pattern, and the buffer 2 stores the pixels of the image data in 5 columns and 5 rows with the target pixel located at the center. Thereby, the surrounding pixel group including the pixels covering all the three primary colors can be arranged in the minimum unit.

Turning back to Fig. 1, the first corrector 5 performs processing to make the result of the first edge detector 3 fall within a specified range. More concretely, the processing performed by the first corrector 5 includes clipping in which the result of the first edge detector 3 is made to be zero if it is lower than a specified lower limit and made to be the maximum value if it exceeds a specified upper limit.

Next, the second edge detector 4 will be explained. Similarly to the first edge detector 3, the second edge detector 4 determines whether the surrounding pixel group constitutes an even image or rapidly changing image such as an edge image. The second edge detector 4 has a luminosity average value calculating unit 41, an ambient luminosity average value calculating unit 42, and a luminosity difference cumulative value calculating value 43.

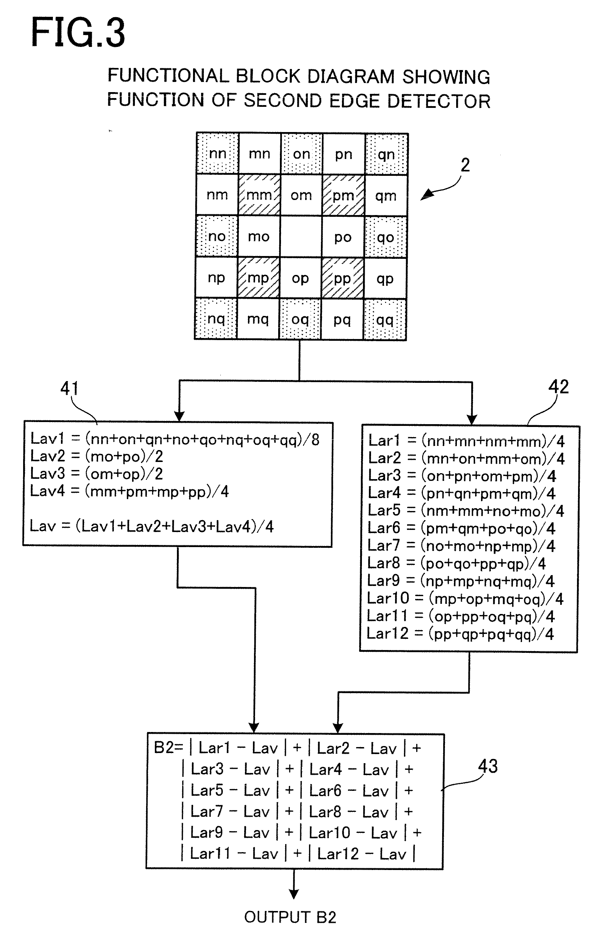

Fig. 3 is a functional block diagram showing the function of the second edge detector 4.

The luminosity average value calculating unit 41 calculates the average value of every pixel group having the same color of the surrounding pixel group. Then, the average values are totaled to obtain a sum which is in turn divided by the number of colors, i.e., 4 so that a luminosity average value Lav is obtained as the average value of the surrounding pixel group. This calculation will be concretely explained below.

As the average of R pixels, an average value Lav1 is obtained by dividing the sum of the pixels nn, on, qn, no, qo, nq, oq, qq by 8. As the average of Gr pixels, an average value Lav2 is obtained by dividing the sum of the pixels mo, po by 2. As the average of Gb pixels, an average value Lav3 is obtained by dividing the sum of the pixels om, op by 2. As the average of B pixels, an average value Lav4 is obtained by dividing the sum of the pixels mm, pm, mp, pp by 4. Then, the luminosity average value Lav is obtained by dividing the sum of the average values Lav1, Lav2, Lav3, Lav4 by 4.

Although the average value of the Gr pixels is obtained by dividing the sum of mo and po by 2 in this embodiment, the average value Lav2 may be obtained by further adding the pixels mn, pn, mq, pq which are the Gr pixels of the surrounding pixel group to the sum of the pixels mo and po and dividing the final sum by 6. Although the average value of the Gb pixels is obtained by dividing the sum of om and op by 2 in this embodiment, the average value Lav3 may be obtained by further adding the pixels nm, qm, np, qp which are the Gr pixels of the surrounding pixel group to the sum of the pixels om and op and dividing the final sum by 6.

In the ambient luminosity average value calculating unit 42, combinations of pixels covering all the three primary colors are taken out from the surrounding pixel group and an ambient luminosity average value Lar, which is the average of a combination of pixels, is obtained for each combination of pixels. In this embodiment, the image data is of 5 by 5 pixel size and the combinations of pixels covering all the three primary colors are constituted by R pixels, Gr pixels, Gb pixels and B pixels.

The following 12 combinations of R pixels, Gr pixels, Gb pixels and B pixels in the surrounding pixel group are possible: (i) pixels nn, mn, nm, mm; (ii) pixels mn, on, mm, om; (iii) pixels on, pn, om, pm; (iv) pixels pn, qn, pm, qm; (v) pixels nm, mm, no, mo; (vi) pixels pm, qm, po, qo; (vii) pixels no, mo, np, mp; (viii) pixels po, qo, pp, qp; (ix) pixels np, mp, nq, mq; (x) pixels mp, op, mq, oq; (xi) pixels op, pp, oq, pq; (xii) pixels pp, qp, pq, qq. The ambient luminosity average value calculating unit 42 calculates the average of the pixels of each combination so that ambient luminosity average values Lar1 to Lar12 are obtained.

In the luminosity difference cumulative value calculating unit 43, a luminosity difference cumulative value B2 is obtained by totaling the absolute values of the ambient luminosity average values Lar, each absolute value being obtained by subtracting the luminosity average value Lav from each ambient luminosity average value Lar. In the image processing system 1 of this embodiment, the sum of |Lar1 - Lav| ,|Lar2 - Lav|, |Lar3 - Lav|,|Lar4 - Lav|,|Lar5 - Lav|,|Lar6 - Lav|,|Lar7 - Lav|,|Lar8 - Lav|,|Lar9 - Lav|,|Lar10 - Lav|,|Lar11 - Lav|,|Lar12 - Lav| is calculated to obtain the luminosity difference cumulative value B2.

If the surrounding pixel group constitutes an even image for instance, the difference between the luminosity average value Lav and each ambient luminosity average value Lar of the surrounding pixel group is small, so that a small value is output as the luminosity difference cumulative value B2. On the other hand, if the surrounding pixel group constitutes a rapidly changing image such as an edge image, the difference between the luminosity average value Lav and each ambient luminosity average value Lar of the surrounding pixel group is large, so that a large value is output as the luminosity difference cumulative value B2.

In the buffer 2, the target value is placed at the center and the same number of surrounding pixels are aligned in horizontal and vertical directions. Thereby, intended pixels can be equally taken out from the pixels aligned in the horizontal direction and vertical direction. In the surrounding pixel group, the pixels having the same color as of the target pixel are arranged in the outermost periphery. Thereby, the pixels covering all the three primary colors can be effectively taken out. The image data of the surrounding pixel group is arranged in a Bayer pattern, and the buffer 2 stores the pixels of the image data in 5 columns and 5 rows with the target pixel located at the center. Thereby, the surrounding pixel group including the pixels covering all the three primary colors can be arranged in the minimum unit.

Turning back to Fig. 1, the second corrector 6 performs processing to make the result of the second edge detector 4 fall within a specified range. More concretely, the processing performed by the second corrector 6 includes clipping in which the result of the second edge detector 4 is made to be zero if it is lower than a specified lower limit and made to be the maximum value if it exceeds a specified upper limit.

The selector 7 selects either the output of the first corrector 5 or the output of the second corrector 6 in response to a mode signal MD to output a correction value B. It is also possible to design the selector 7 so as to output a larger or smaller one of the output of the first corrector 5 and the output of the second corrector 6 as the correction value B in response to the mode signal MD.

In the noise filter 8, a known median filter is used to perform noise removal processing upon the image data and the target pixel oo is output after the processing. The noise filter 8 has a median filter and a target pixel calculating unit for mixing the target pixel oo from the image data with the target pixel oo from the median filter at a ratio corresponding to the correction value B to output.

In the above arrangement, the output characteristic of the noise filter 8 is varied in accordance with the size of the correction value B from the selector 7. More specifically, the value of the target pixel oo from the image data is mixed with the value of the target pixel oo output from the median filter at a ratio corresponding to the size of the correction value B to output. For instance, if the correction value B is small, the proportion of the target pixel oo from the median filter is made large, thereby increasing the noise removal characteristic. On the other hand, if the correction value B is large, the proportion of the target pixel oo from the image data is made large, thereby reducing the noise removal characteristic.

Although the noise filter 8 is designed to vary the ratio, at which the target pixel oo from the image data is mixed with the target pixel oo from the median filter, according to the size of the correction value B in this embodiment, the noise filter 8 may be designed as follows. The noise filter 8 is further provided with a comparator for comparing the correction value B with a threshold value BTH and a target pixel selector for selecting the value of either the target pixel oo from the median value or the target pixel oo from the image data. If the correction value B is lower than the threshold value BTH, the target pixel selector outputs the target pixel oo of the median filter and if the correction value B is equal to or higher than the threshold value BTH, the target pixel selector outputs the target pixel oo of the image data. This arrangement can be accomplished with a simpler circuit configuration compared to the circuit including the target pixel calculating unit described earlier.

Next, the operation of the image processing system 1 of the first embodiment will be described.

First of all, a case where the image data having 5 by 5 pixels constitutes an even image will be discussed. The first edge detector 3 outputs a small value as the max-min difference value B1, because the difference between the maximum value Bmax and minimum value Bmin of the surrounding pixels having the same color as of the target pixel oo is small, The second edge detector 4 also outputs a small value as the luminosity difference cumulative value B2, because the difference between the luminosity average value Lav and each ambient luminosity average value Lar of the surrounding pixel group is small.

Therefore, whichever the max-min difference value B1 or the luminosity difference cumulative value B2 is selected in the selector 7, the correction value B output from the selector 7 is small.

Where the correction value B is small, the noise removal characteristic is strong in the noise filter 8 and therefore the noise filter 8 outputs a value from which noise has been removed to a great extent.

Namely, if the image data constitutes an even image, a value from which noise has been removed to a great extent is output as the target pixel oo. More specifically, in cases where the image data is even, even if the target pixel oo includes noise, the noise can be restrained from becoming conspicuous.

If some pixels of the surrounding pixel group have distinctively high-level noise compared to other pixels in the group, the max-min difference value B1 sometimes becomes large although the surrounding pixel group is even. Even if such high level noise is contained in the surrounding pixel group, the noise peak value can be restrained, because the luminosity difference cumulative value B2 is obtained through the calculation of the averages of the combinations of R pixels, Gr pixels, Gb pixels and B pixels in the surrounding pixel group. For this reason, the luminosity difference cumulative value B2 becomes smaller than the max-min difference value B1 and therefore the condition of the image data is more properly reflected in the luminosity difference cumulative value B2. That is, the second edge detector 4 can output the correction value of the noise filter 8 with higher accuracy than the first edge detector 3.

Next, there will be explained a case where the image data having 5 by 5 pixels constitutes a rapidly changing image such as the image of an edge. The first edge detector 3 outputs a large value as the max-min difference value B1, because the difference between the maximum value Bmax and minimum value Bmin of the pixels of the surrounding pixel group which pixels have the same color as of the target pixel oo is large. The second edge detector 4 also outputs a large value as the luminosity difference cumulative value B2, since the difference between the luminosity average value Lav and each ambient luminosity average value Lar of the surrounding pixel group is large.

Therefore, whichever the max-min difference value B1 or the luminosity difference cumulative value B2 is selected by the selector 7, the correction value B output from the selector 7 is large.

Where the correction value B is large, the noise removal characteristic is weak in the noise filter 8 and therefore the noise filter 8 outputs a value from which noise has been removed to a small extent.

Specifically, if the image data constitutes a rapidly changing image such as the image of an edge, a value from which noise has been removed to a small extent is output as the target pixel oo. That is, since the changes in the surrounding pixel group are significant in cases where the image data constitutes the image of an edge or the like, noise in the target pixel oo does not become conspicuous even though noise removal is not performed. Not only that, this arrangement avoids the problem that an edge is blurred by noise removal.

With the above arrangement, the image processing system 1 of the first embodiment is capable of properly performing noise removal on the target pixel oo with determination as to whether the surrounding pixel group is associated with an even image or edge image. In addition, the image data region determination is directly performed on Bayer pattern image data and noise is removed directly from the Bayer pattern image data. This arrangement provides higher-accuracy noise removal unsusceptible to the influence of the surrounding pixel group, compared to the arrangement in which image data is once converted into RGB image data or YUV image data which is in turn subjected to noise removal. Additionally, since the image processing system 1 does not need a circuit for performing RGB conversion and/or YUV conversion on Bayer pattern image data, the circuit configuration of the image processing system 1 can be made small, compared to the systems having a conversion circuit.

### (Second Embodiment)

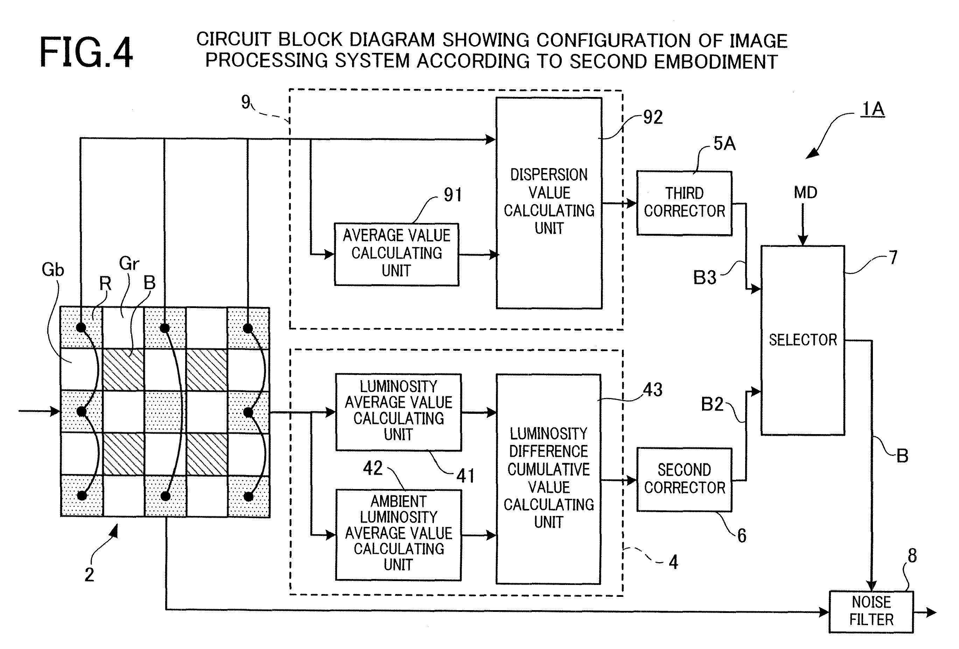

Next, there will be explained an image processing system 1A according to a second embodiment. Fig. 4 is a circuit block diagram showing the configuration of the image processing system 1A of the second embodiment. The image processing system 1A of the second embodiment includes a third edge detector 9 in place of the first edge detector 3 of the image processing system 1 of the first embodiment. Accordingly, only the different point, that is, the third edge detector 9 will be described in detail and an explanation of the same parts as of the first embodiment will be simplified or skipped herein.

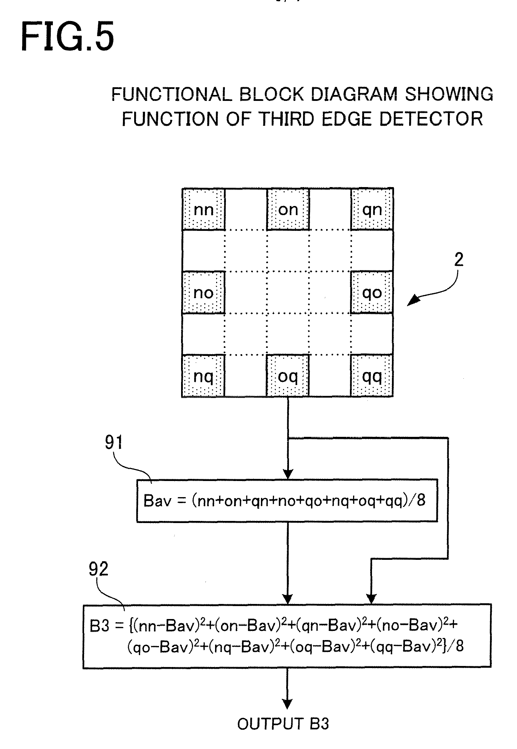

The third edge detector 9 has an average value calculating unit 91 and a dispersion value calculating unit 92. Referring to Fig. 5, the average value calculating unit 91 and the dispersion value calculating unit 92 will be described.

In the average value calculating unit 91, the pixels nn, on, qn, no, qo, nq, oq, qq of the surrounding pixel group which pixels have the same color as the target pixel oo are obtained and the sum of them is divided by 8 thereby obtaining an average value Bav.

The dispersion value calculating unit 92 calculates the difference between each of the pixels of the surrounding pixel group which pixels have the same color as the target pixel oo and the average value Bav obtained by the average value calculating unit 91 and outputs a dispersion value B3 which is obtained by acquiring the square values of the above difference values and then dividing the sum of the square values by 8.

If the surrounding pixel group constitutes an even image for instance, the difference between the average value Bav and each of the pixels nn, on, qn, no, qo, nq, oq, qq is small and therefore a small value is output as the dispersion value B3. On the other hand, if the surrounding pixel group constitutes a rapidly changing image such as an edge image, the difference between the average value Bav and each of the pixels nn, on, qn, no, qo, nq, oq, qq is large and therefore a large value is output as the dispersion value B3.

The image processing system 1A of the second embodiment has the same function as of the image processing system 1 of the first embodiment and therefore is capable of properly performing noise removal on the target pixel oo with determination as to whether the surrounding pixel group is associated with an even image or edge image. In addition, the image data region determination is directly performed on Bayer pattern image data and noise is removed directly from the Bayer patter image data. This arrangement provides higher-accuracy noise removal unsusceptible to the influence of the surrounding pixel group, compared to the arrangement in which image data is once converted into RGB image data or YUV image data which is in turn subjected to noise removal. Additionally, since the image processing system 1 does not need a circuit for performing RGB conversion and/or YUV conversion on Bayer pattern image data, the circuit configuration of the image processing system 1 can be made small, compared to the systems having a conversion circuit.

In the buffer 2, the target pixel is placed at the center and the same number of surrounding pixels are aligned in the horizontal and vertical directions. Thereby, intended pixels can be equally taken out from the pixels aligned in the horizontal direction and vertical direction. In addition, the surrounding pixels having the same color as of the target pixel are arranged in the outermost periphery. This enables it to take out pixels covering all the three primary colors without wasting pixels. Further, the surrounding pixel group constitutes Bayer pattern image data, and the buffer 2 stores the pixels of the image data in 5 columns and 5 rows with the target pixel located at the center. Thereby, the surrounding pixel group including pixels covering all the three primary colors can be arranged in the minimum unit.

In the first edge detector 3 of the image processing system 1 of the first embodiment, since the condition of the region of the image data is detected from the difference between the maximum value Bmax and minimum value Bmin of the pixels nn, on, qn, no, qo, nq, oq, qq of the surrounding pixel group which pixels have the same color as of the target pixel oo, erroneous detection occurs if any one of the pixels nn, on, qn, no, qo, nq, oq, qq contains noise. In contrast with this, the third edge detector 9 of the image processing system 1A of the second embodiment detects the condition of the region of the image data from the dispersion value B3 of the pixels nn, on, qn, no, qo, nq, oq, qq. Therefore, even if any one of the pixels nn, on, qn, no, qo, nq, oq, qq contains noise, the influence of noise will be dispersed so that erroneous detection is restrained.

### (Third Embodiment)

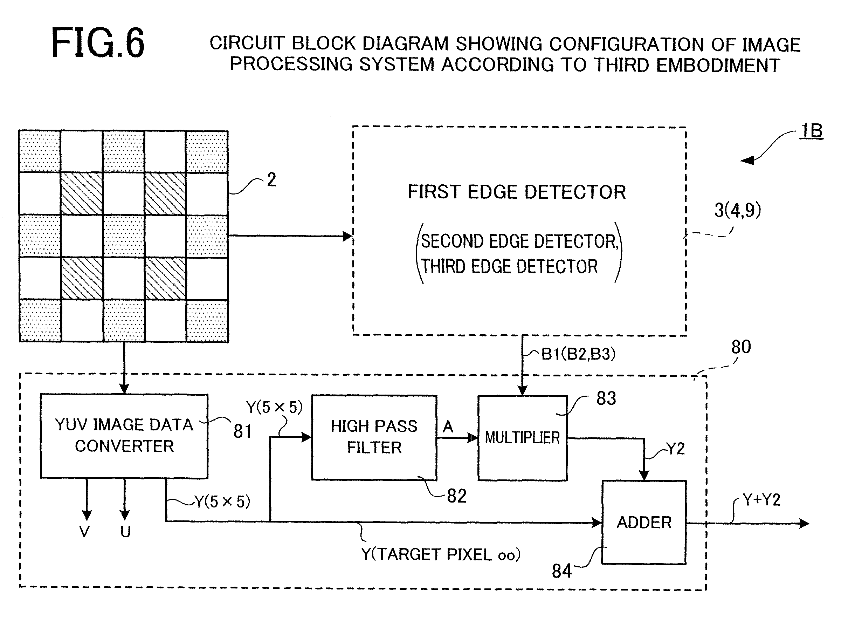

Next, an image processing system 1B constructed according to a third embodiment will be described. Fig. 6 is a circuit block diagram showing the configuration of the image processing system 1B of the third embodiment. The image processing system 1B of the third embodiment has an edge enhancement unit 80 in place of the noise filter 8 of the image processing system 1 of the first embodiment and differs from the image processing system 1 in that the image processing system 1B excludes the luminosity difference cumulative value calculating unit 43 and the selector 7. Accordingly, only the different point, that is, the edge enhancement unit 80 will be described in detail and an explanation of the same parts as of the first embodiment will be simplified or skipped herein.

The edge enhancement unit 80 includes a YUV image data converter 81, a high pass filter 82, a multiplier 83 and an adder 84.

Of these components, the YUV image data converter 81 inputs Bayer pattern image data having 5 by 5 pixels stored in the buffer 2 and coverts it into YUV image data of 5 by 5 pixels. Herein, the YUV image data is composed of a brightness signal Y; a difference signal U indicative of the difference between the brightness signal Y and the blue color component; and a difference signal V indicative of the difference between the brightness signal Y and the red color component. First, the Bayer pattern image data stored in the buffer 2 is converted into RGB image data (image data consisting of a red signal (R), green signal (G), and blue signal (B)) by the known bi-linear technique and further converted into YUV image data by means of a known technique.

The high pass filter 82 inputs the brightness signal Y of 5 by 5 pixels out of the YUV image data of 5 by 5 pixels output from the YUV image data converter 81; performs high pass filtering processing for enhancing the high frequency components of the spatial frequency of the brightness signal of 5 by 5 pixels; and outputs a high-pass enhanced pixel value A corresponding to the position of the target pixel oo. The high-pass filtering processing is performed by a method using a known 5 by 5 pixel weighted matrix. This weighted matrix can be arbitrarily set by a CPU (not shown) etc.

The multiplier 83 is a circuit for multiplying the high-pass enhanced pixel value A output from the high pass filter 82 by the max-min difference value B1 output from the first edge detector 3 to output a brightness correction value Y2. The max-min difference value B1 is prenormalized such that the minimum value is zero and the maximum value is 1. Specifically, as the image data is evener and has smaller changes, the max-min difference value B1 becomes closer to zero. On the other hand, as the image data more rapidly changes such as the case where it is associated with the image of an edge, the max-min difference value B1 becomes closer to 1. With this multiplication, the brightness correction value Y2 becomes zero if the image data is even and becomes close to the high-pass enhanced pixel value A if the image data is associated with an edge.

In the adder 84, the brightness correction value Y2 is added to the pixel of the brightness signal Y associated with the position of the target pixel oo to output the brightness signal Y + Y2.

With the above arrangement, the image processing system 1B of the third embodiment properly performs edge enhancement on the target pixel oo with determination as to whether the surrounding pixel group is associated with an even image or edge image. Thanks to the image data region determination which is directly performed on Bayer pattern image data, the invention provides higher-accuracy edge enhancement processing unsusceptible to the influence of the surrounding pixel group, compared to the arrangement in which image data is once converted into RGB image data or YUV image data which is in turn subjected to image data region determination.

While the first edge detector 3 is used as a means for detecting an edge in the third embodiment, the second edge detector 4 or the third edge detector 9 may be used. In this case, the image data region determination is also directly performed on Bayer pattern image data. Therefore, the invention provides higher-accuracy edge enhancement processing unsusceptible to the influence of the surrounding pixel group, compared to the arrangement in which image data is once converted into RGB image data or YUV image data which is in turn subjected to image data region determination.

It is obvious that the invention is not necessarily limited to the particular embodiments shown herein and various changes and modifications are made to the disclosed embodiments without departing from the spirit and scope of the invention.

For instance, while the first and second embodiments have been described in terms of a median filter used as the noise filter, it is readily apparent that the invention is equally applicable to cases where a known spatial filter for reducing the high frequency of spatial frequency is used.

While the foregoing embodiments have been described with the case where the buffer 2 is designed to store 5 by 5 pixels, it is evident that the invention is equally applicable to a buffer for storing image data of other sizes such as 9 by 9 pixels.

It should be noted that the third edge detector exemplifies the dispersion value calculating unit and the YUV image data converter exemplifies the brightness data converter.

The embodiments provide an image processing system of small circuit scale that is capable of performing high-accuracy image processing such as noise removal on a group of basic pixels covering the three primary colors such as Bayer pattern image data without use of an image conversion circuit.

## Claims

1. An image processing system (1, 1B) comprising:
a buffer (2) for storing a target pixel (oo) that is an object of image processing and a group of pixels surrounding the target pixel (oo), such that the pixels are aligned in horizontal and vertical directions;
a maximum value detector (31) for obtaining a maximum value (Bmax) from pixels of the surrounding pixel group which pixels have the same color as the target pixel;
a minimum value detector (32) for obtaining a minimum value (Bmin) from the pixels of the surrounding pixel group which pixels have the same color as the target pixel; and
a subtracter (33) for subtracting a result (Bmin) obtained by the minimum value detector (32) from a result obtained by the maximum value detector (31).

2. An image processing system (1A) comprising:
a buffer (2) for storing a target pixel (oo) that is an object of image processing and a group of pixels surrounding the target pixel (oo), such that the pixels are aligned in horizontal and vertical directions; and
a dispersion value (92) calculating unit for obtaining a dispersion value of pixels of the surrounding pixel group which pixels have the same color as the target pixel.

3. An image processing system (1) comprising:
a buffer (2) for storing a target pixel (oo) that is an object of image processing and a group of pixels surrounding the target pixel, such that the pixels are aligned in horizontal and vertical directions;
a luminosity average value calculating unit (41) for obtaining a luminosity average value that is an average value (Lav) of the surrounding pixel group;
a surrounding luminosity average value calculating unit (42) for choosing pixels that cover all the three primary colors from the surrounding pixel group to prepare pixel combinations and obtaining an ambient luminosity average value of each pixel combination, the ambient luminosity average value (Lar) being an average value of a pixel combination; and
a luminosity difference cumulative value calculating unit (43) for obtaining a luminosity difference cumulative value (B2) that is the sum of absolute values each obtained by subtracting the luminosity average value (Lav) from each ambient luminosity average value (Lar).

4. The image processing system (1, 1B) according to claim 1,
wherein the target pixel (00) is located at the center of the arrangement of the pixels in the buffer (2) and the surrounding pixel group is arranged such that the same number of pixels are aligned in the horizontal and vertical directions.

5. The image processing system according to claim 4,
wherein the surrounding pixel group is arranged such that the pixels having the same color as the target pixel are located in the outermost periphery.

6. The image processing system according to claim 2,
wherein the target pixel (00) is located at the center of the arrangement of the pixels in the buffer and the surrounding pixel group is arranged such that the same number of pixels are aligned in the horizontal and vertical directions.

7. The image processing system according to claim 6,
wherein the surrounding pixel group is arranged such that the pixels having the same color as the target pixel are located in the outermost periphery.

8. The image processing system according to claim 3,
wherein the target pixel (oo) is located at the center of the arrangement of the pixels in the buffer (2) and the surrounding pixel group is arranged such that the same number of pixels are aligned in the horizontal and vertical directions.

9. The image processing system according to claim 8,
wherein the surrounding pixel group is arranged such that the pixels having the same color as the target pixel are located in the outermost periphery.

10. The image processing system (1, 1B) according to claim 1,
wherein the image data consists of Bayer pattern image data and the buffer stores the pixels of the image data in 5 columns and 5 rows with the target pixel located at the center.

11. The image processing system according to claim 2,
wherein the image data consists of Bayer pattern image data and the buffer stores the pixels of the image data in 5 columns and 5 rows with the target pixel located at the center.

12. The image processing system according to claim 3,
wherein the image data consists of Bayer pattern image data and the buffer stores the pixels of the image data in 5 columns and 5 rows with the target pixel located at the center.

13. The image processing system (1) according to claim 1, further comprising:
a noise filter (8) that inputs a result (B) obtained by the subtracter (33) as a control value and is designed to increase a noise removal characteristic as the input control value (B) decreases.

14. The image processing system (1B) according to claim 1, further comprising:
a high pass filter (82) for extracting the high frequency components of spatial frequency from brightness information (Y) on the surrounding pixel group and the target pixel (00) and outputting the brightness information corresponding to the position of the target pixel after extracting the high frequency components; and
a multiplier (83) for multiplying a result (A) obtained by the high pass filter (82) by a result (B1) obtained by the subtracter (33).

15. The image processing system according to claim 2, further comprising:
a noise filter that inputs a result obtained by the dispersion value calculating unit as a control value and is designed to increase a noise removal characteristic as the input control value decreases.

16. The image processing system according to claim 2, further comprising:
a high pass filter for extracting the high frequency components of spatial frequency from brightness information on the surrounding pixel group and the target pixel and outputting the brightness information corresponding to the position of the target pixel after extracting the high frequency components; and
a multiplier for multiplying a result obtained by the high pass filter by a result obtained by the dispersion value calculating unit.

17. The image processing system according to claim 3, further comprising:
a noise filter that inputs a result obtained by the luminosity difference cumulative value calculating unit as a control value and is designed to increase a noise removal characteristic as the input control value decreases.

18. The image processing system according to claim 3, further comprising:
a high pass filter for extracting the high frequency components of spatial frequency from brightness information on the surrounding pixel group and the target pixel and outputting the brightness information corresponding to the position of the target pixel after extracting the high frequency components; and
a multiplier for multiplying a result obtained by the high pass filter by a result obtained by the luminosity difference cumulative value calculating unit.
